# FASCICULE DE BREVET EUROPEEN

(11) **EP 2 815 153 B1**
(45) Date de publication et mention de la délivrance du brevet: **20.05.2020**
(21) Numéro de dépôt: 13706608.0
(22) Date de dépôt: 31.01.2013
(51) Int. Cl.: F16H 61/4096, B60K 6/12, F01K 23/06, F02G 5/02, B60W 20/00, B60K 17/10

(54) **GROUPE DE PROPULSION HYBRIDE HYDRAULIQUE COMPRENANT UN CIRCUIT HYDRAULIQUE**
HYDRAULISCHER HYBRIDANTRIEB MIT EINEM HYDRAULIKKREIS
HYBRID HYDRAULIC POWER TRAIN INCLUDING A HYDRAULIC CIRCUIT

(30) Priorité: 16.02.2012 FR 1251431
(43) Date de publication de la demande: 24.12.2014
(73) Titulaire: Technoboost, 75116 Paris (FR)
(72) Inventeur: LE LIEVRE, Armel, F-78360 Montesson (FR)
(74) Mandataire: Bourguignon, Eric Pascal Jean
(86) Numéro de dépôt international: PCT/FR2013/050205
(87) Numéro de publication internationale: WO 2013/121126

(56) Documents cités:
- CN-Y- 201 208 898
- DE-A1-102007 034 025
- FR-A1- 2 504 631
- US-A1- 2005 193 733
- US-A1- 2010 133 031

## Description

L'invention relève du domaine des agencements ou montages de plusieurs moteurs différents pour une propulsion réciproque ou commune d'un véhicule automobile. Elle a pour objet un circuit hydraulique équipant un véhicule automobile. Elle a aussi pour objet un groupe de propulsion hybride hydraulique comprenant un tel circuit hydraulique.

Le document de brevet US 2009/0205892 (Jensen et al.) décrit un véhicule automobile qui est équipé d'un groupe de propulsion hybride hydraulique. Le groupe de propulsion hybride hydraulique comprend un moteur à combustion interne qui entraîne une pompe hydraulique haute-pression. La pompe hydraulique haute-pression est constitutive d'un circuit hydraulique qui comprend un réservoir haute-pression et un réservoir basse-pression. Un fluide circule à l'intérieur du circuit hydraulique. Le moteur à combustion interne est par ailleurs équipé d'une ligne d'échappement qui est destinée à évacuer vers un environnement extérieur au véhicule automobile des gaz d'échappement produits par le moteur à combustion interne. La ligne d'échappement est équipée d'une boucle de dérivation des gaz d'échappement. La boucle de dérivation comprend un échangeur thermique associé au réservoir haute-pression. Les gaz d'échappement sont des gaz chauds qui, à l'intérieur de l'échangeur thermique, viennent au contact du réservoir haute-pression pour tendre à réchauffer le fluide contenu à haute pression à l'intérieur du réservoir haute-pression.

On connait encore le document US2005/0193733 correspondant au préambule de la revendication 1.

Un tel circuit hydraulique offre un rendement de transfert thermique entre une énergie thermique récupérée des gaz d'échappement et une énergie thermique transférée au fluide contenu à haute pression à l'intérieur du réservoir haute-pression.

Le but de la présente invention est de proposer un circuit hydraulique équipant un véhicule automobile qui soit simple, léger et fiable et qui offre néanmoins un rendement optimisé de transfert d'énergie entre une énergie thermique récupérée des gaz d'échappement produits par un moteur à combustion interne équipant le véhicule automobile et une énergie hydraulique transférée à un fluide circulant à l'intérieur du circuit hydraulique, un tel fluide étant partiellement contenu à haute pression à l'intérieur d'un réservoir haute-pression constitutif du circuit hydraulique.

La présente invention est un groupe de propulsion hybride hydraulique comprenant un circuit hydraulique et une boucle thermique, dont est équipé un véhicule automobile. Le circuit hydraulique comprend :
- une pompe à huile principale en relation avec un moteur à combustion par l'intermédiaire d'un organe de transmission de puissance,
- une branche haute-pression qui s'étend depuis la pompe à huile principale jusqu'à un moteur hydraulique, et
- une branche basse-pression qui s'étend depuis ce moteur hydraulique jusqu'à la pompe à huile principale,

Selon la présente invention, le circuit hydraulique comprend une conduite de dérivation qui est équipée d'une pompe à huile secondaire entraînée par un élément de transmission de puissance qui est en relation avec un organe d'expansion installé sur la boucle thermique.

La conduite de dérivation comporte avantageusement un point de départ constitué d'un réservoir basse-pression du circuit hydraulique.

Selon une première variante de réalisation, la conduite de dérivation comporte un point d'arrivée constitué du réservoir haute-pression.

Selon une deuxième variante de réalisation, la conduite de dérivation comporte un point d'arrivée constitué d'un point de dérivation du circuit hydraulique, qui est placé entre la pompe à huile principale et le réservoir basse-pression.

La conduite de dérivation comporte avantageusement un réservoir moyenne-pression placé entre la pompe à huile secondaire et le point de dérivation.

La conduite de dérivation comporte avantageusement un clapet anti-retour placé entre le réservoir basse-pression et le point de dérivation.

La boucle thermique comprend avantageusement un évaporateur installé sur une ligne d'échappement du véhicule automobile, une telle ligne d'échappement étant en relation avec le moteur à combustion interne du véhicule automobile.

La boucle thermique comprend avantageusement un condenseur et une pompe à eau.

Un véhicule automobile de la présente invention comprend un tel groupe de propulsion hybride.

D'autres caractéristiques et avantages de la présente invention apparaîtront à la lecture de la description qui va en être faite d'exemples de réalisation, en relation avec les figures des planches annexées, dans lesquelles :

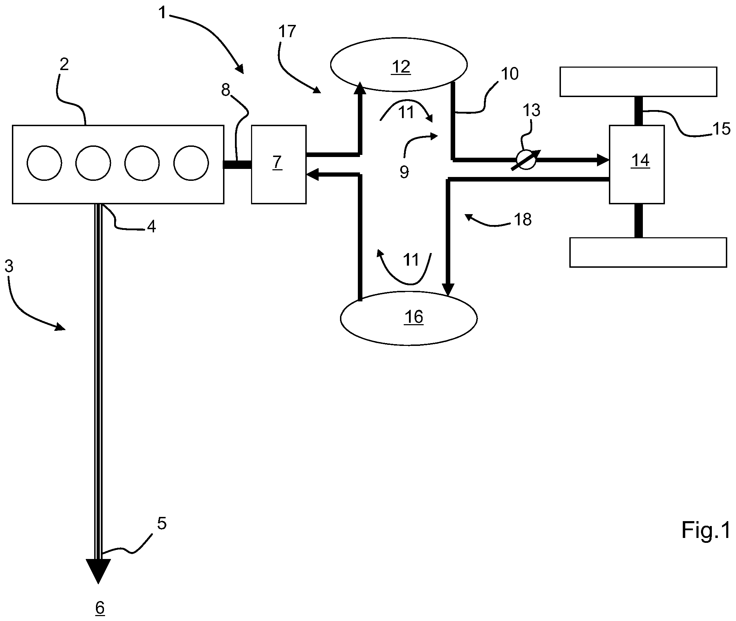

- La figure 1 est une vue schématique partielle d'un groupe de propulsion hybride hydraulique équipant un véhicule automobile.
- La figure 2 est une vue schématique d'une première variante de réalisation du groupe de propulsion hybride hydraulique partiellement représenté sur la figure précédente.
- La figure 3 est une vue schématique d'une deuxième variante de réalisation du groupe de propulsion hybride hydraulique partiellement représenté sur la figure 1.

Sur les figures, un véhicule automobile est équipé d'un groupe de propulsion hybride hydraulique 1 pour la mise en mouvement du véhicule automobile. Le groupe de propulsion hybride hydraulique 1 comprend un moteur à combustion interne 2 qui est équipé d'une ligne d'échappement 3. La ligne d'échappement 3 comprend une extrémité amont 4 en relation avec le moteur à combustion interne 2 et une extrémité aval 5 en relation avec un milieu extérieur 6 au véhicule automobile. La ligne d'échappement 3 est destinée à évacuer vers l'environnement extérieur 6 des gaz d'échappement produits par le moteur à combustion interne 2. Le moteur à combustion interne 2 est également équipé d'une pompe à huile principale 7 qui est en relation avec le moteur à combustion interne 1 par l'intermédiaire d'un organe de transmission de puissance 8, tel qu'un axe de pompe. La pompe à huile principale 7 est constitutive d'un circuit hydraulique 9 à l'intérieur duquel circule un premier fluide 10, préférentiellement liquide, huile notamment ou analogue. Selon un sens d'écoulement 11 du premier fluide 10 à l'intérieur du circuit hydraulique 9, ce dernier comprend successivement un réservoir haute-pression 12 pour stocker du premier fluide 10 à haute-pression, une vanne de régulation 13 pour contrôler un débit du premier fluide 10 à l'intérieur du circuit hydraulique 9, un moteur hydraulique 14 pour transmettre une puissance hydraulique à un train de roues 15 qui équipe le véhicule automobile, un réservoir basse-pression 16 pour stocker du premier fluide 10 à basse-pression et la pompe à huile principale 7. Ainsi, le circuit hydraulique 9 comprend une branche haute-pression 17 qui s'étend depuis la pompe à huile principale 7 jusqu'au moteur hydraulique 14 selon ledit sens d'écoulement 11 et une branche basse-pression 18 qui s'étend depuis le moteur hydraulique 14 jusqu'à la pompe à huile principale 7 selon ledit sens d'écoulement 11. Autrement dit, la branche haute-pression 17 comprend la pompe à huile principale 7, le réservoir haute-pression 12, la vanne de régulation 13 et le moteur hydraulique 14. Autrement dit encore, la branche basse-pression 18 comprend le moteur hydraulique 14, le réservoir basse-pression 16 et la pompe à huile principale 7.

Le réservoir basse-pression 12 contient le premier fluide 10 à une pression qui est inférieure à celle à laquelle le réservoir haute-pression 17 contient ce même premier fluide 10. A titre d'exemple non limitatif, le réservoir basse-pression 12 contient le premier fluide 10 à une pression qui est comprise entre 5 bars et 15 bars, préférentiellement 10 bars, tandis que le réservoir haute-pression 17 contient le premier fluide 10 à une pression qui est comprise entre 200 bars et 250 bars, préférentiellement 200 bars.

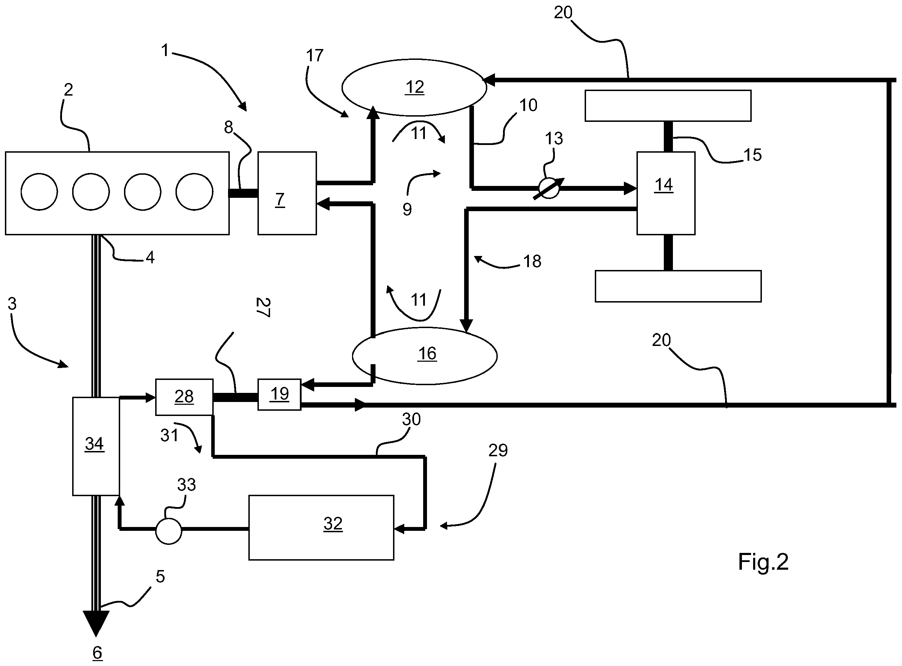

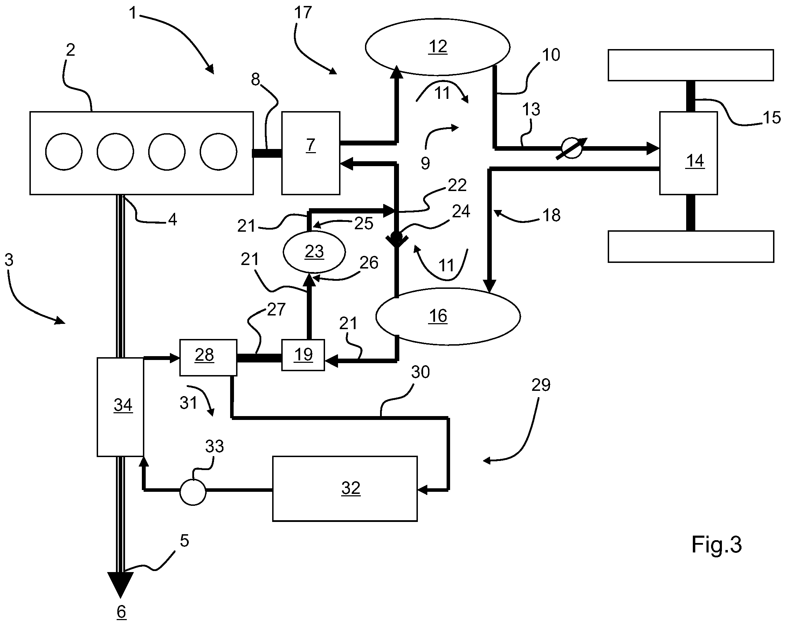

Selon la présente invention, et en se reportant sur les figures 2 et 3, le circuit hydraulique 9 comprend une pompe à huile secondaire 19 qui est disposée sur une conduite de dérivation 20,21 du circuit hydraulique 9.

Selon une première variante de réalisation représentée sur la figure 2, une première conduite de dérivation 20 s'étend entre le réservoir basse-pression 16 et le réservoir haute-pression 12. Ces dispositions permettent d'augmenter la pression du premier fluide 10 en sortie du réservoir basse-pression 16 et de renvoyer ce premier fluide 10 à l'intérieur du réservoir haute-pression 12 par l'intermédiaire de la première conduite de dérivation 20. Il en résulte une augmentation avantageuse de la pression du premier fluide 10 en amont du moteur hydraulique 14, et plus particulièrement de la vanne de régulation 13.

Selon une deuxième variante de réalisation représentée sur la figure 3, une deuxième conduite de dérivation 21 s'étend entre le réservoir basse-pression 16 et un point de dérivation 22 situé sur la branche basse-pression 18, plus particulièrement entre le réservoir basse-pression 16 et la pompe à huile principale 7. Dans ce cas-là, la deuxième conduite de dérivation 22 comprend préférentiellement un réservoir moyenne-pression 23, de l'ordre de 20 bars à 10% près, qui placée entre la pompe à huile secondaire 19 et le point de dérivation 22. La branche basse-pression 18 comprend préférentiellement encore un clapet anti-retour 24. Le clapet anti-retour 24 est préférentiellement placé entre le point de dérivation 22 et le réservoir basse-pression 16 pour éviter une remontée de premier fluide 10 depuis le point de dérivation 22 vers le réservoir basse-pression 16. Il en résulte une augmentation avantageuse de la pression du premier fluide 10 en amont de la pompe à huile principale 7. Il en résulte aussi une différence de pression minimisée entre un point d'entrée 25 et un point de sortie 26 de premier fluide 10 que comporte la pompe à huile secondaire 19.

Selon les deux variantes précédemment citées, la pompe à huile secondaire 19 est entraînée par un élément de transmission de puissance 27 qui est en relation avec un organe d'expansion 28. Ce dernier est constitutif d'une boucle thermique 29, dite boucle de Rankine, à l'intérieur de laquelle circule un deuxième fluide 30, tel que de l'eau. Selon un sens d'écoulement 31 du deuxième fluide 30 à l'intérieur de la boucle thermique, cette dernier comprend l'organe d'expansion 28 à l'intérieur duquel le deuxième fluide 30 subit une détente pour transmettre une puissance mécanique à la pompe à huile secondaire 19, un condenseur 32 à l'intérieur duquel le deuxième fluide 30 se condense, une pompe 33 pour mettre en circulation le deuxième fluide 30 à l'intérieur de la boucle thermique 29 et un évaporateur 34 qui est installé sur la ligne d'échappement 3, pour capter de la chaleur aux gaz d'échappement et vaporiser le deuxième fluide 30. Il en résulte que le deuxième fluide 30 est à l'état de vapeur à haute pression entre l'évaporateur 34 et l'organe d'expansion 28, que le deuxième fluide 30 est à l'état de vapeur basse-pression entre l'organe d'expansion 28 et le condenseur 32, que le deuxième fluide 30 est à l'état de liquide basse pression entre le condenseur 32 et la pompe 33, et que le deuxième fluide 30 est à l'état de liquide haute pression entre la pompe 33 et l'évaporateur 34.

Un tel groupe de propulsion hybride hydraulique 1 est notamment adapté pour un véhicule automobile du type engin de chantier pour lequel une transmission hydraulique est couramment mise en œuvre. Toutefois, un tel groupe de propulsion hybride hydraulique 1 est adapté à un véhicule automobile de nature quelconque.

Il apparaît qu'un tel groupe de propulsion hybride hydraulique 1 procure un gain d'efficacité énergétique de l'ordre de 8% à 10% par rapport à un groupe de propulsion hybride hydraulique non équipé de la présente invention de récupération d'énergie thermique à l'échappement.

Il est particulièrement notable qu'un tel groupe de propulsion hybride hydraulique 1 permet en outre et avantageusement une réduction du coût et de la masse du système de propulsion du véhicule automobile par rapport à un groupe de propulsion hybride électrique connu de l'art antérieur. Le tel groupe de propulsion hybride hydraulique 1 de la présente invention permet en effet de valoriser à moindre coût une énergie thermique des gaz d'échappement rejetés par le moteur à combustion interne 2 en s'affranchissant d'un alternateur électrique, lourd, encombrant et coûteux, et en s'affranchissant d'un accouplement mécanique de l'organe d'expansion 28 sur un arbre-moteur du véhicule automobile, ce qui pose des problèmes de synchronisation des puissances délivrées.

## Revendications

1. Groupe de propulsion hybride hydraulique (1) comprenant un circuit hydraulique (9) et une boucle thermique (29), dont est équipé un véhicule automobile, le circuit hydraulique (9) comprenant :
- une pompe à huile principale (7) en relation avec un moteur à combustion interne (1) par l'intermédiaire d'un organe de transmission de puissance (8),
- une branche haute-pression (17) qui s'étend depuis la pompe à huile principale (7) jusqu'à un moteur hydraulique (14), et
- une branche basse-pression (18) qui s'étend depuis ce moteur hydraulique (14) jusqu'à la pompe à huile principale (7),
**caractérisé en ce que** le circuit hydraulique (9) comprend une conduite de dérivation (20,21) qui est équipée d'une pompe à huile secondaire (19) entraînée par un élément de transmission de puissance (27) qui est en relation avec un organe d'expansion (28) installé sur la boucle thermique (29).

2. Groupe de propulsion hybride hydraulique (1) selon la revendication précédente, **caractérisé en ce que** la conduite de dérivation (20,21) comporte un point de départ constitué d'un réservoir basse-pression (16) du circuit hydraulique (9).

3. Groupe de propulsion hybride hydraulique (1) selon l'une quelconque des revendications précédentes, **caractérisé en ce que** la conduite de dérivation (20) comporte un point d'arrivée constitué du réservoir haute-pression (12).

4. Groupe de propulsion hybride hydraulique (1) selon l'une quelconque des revendications 1 et 2, **caractérisé en ce que** la conduite de dérivation (21) comporte un point d'arrivée constitué d'un point de dérivation (22) du circuit hydraulique (9), qui est placé entre la pompe à huile principale (7) et le réservoir basse-pression (16).

5. Groupe de propulsion hybride hydraulique (1) selon la revendication 4, **caractérisé en ce que** la conduite de dérivation (20,21) comporte un réservoir moyenne-pression (23) placé entre la pompe à huile secondaire (19) et le point de dérivation (22).

6. Groupe de propulsion hybride hydraulique (1) selon l'une quelconque des revendications 4 et 5, **caractérisé en ce que** la conduite de dérivation (20) comporte un clapet anti-retour (24) placé entre le réservoir basse-pression (16) et le point de dérivation (22).

7. Groupe de propulsion hybride hydraulique (1) selon l'une des revendications précédentes, **caractérisé en ce que** la boucle thermique (29) comprend un évaporateur installé sur une ligne d'échappement (3) du véhicule automobile, une telle ligne d'échappement (3) étant en relation avec le moteur à combustion interne (2) du véhicule automobile.

8. Groupe de propulsion hybride hydraulique (1) selon la revendication 7, **caractérisé en ce que** la boucle thermique (29) comprend un condenseur (32) et une pompe à eau (33).

9. Véhicule automobile comprenant un groupe de propulsion hybride hydraulique (1) selon l'une quelconque des revendications précédentes.

## Patentansprüche

1. Hydraulischer Hybridantrieb (1), der einen Hydraulikkreis (9) und eine Wärmeschleife (29) umfasst, mit dem ein Kraftfahrzeug ausgestattet ist, wobei der Hydraulikkreis Folgendes umfasst:
- eine Hauptölpumpe (7) in Verbindung mit einer Brennkraftmaschine (1) über ein Leistungsübertragungselement (8),
- einen Hochdruckstrang (17), der sich von der Hauptölpumpe (7) bis zu einem Hydraulikmotor (14) erstreckt, und
- einen Niederdruckstrang (18), der sich von diesem Hydraulikmotor (14) bis zu der Hauptölpumpe (7) erstreckt,
**dadurch gekennzeichnet, dass** dieser Hydraulikkreis (9) eine Abzweigleitung (20, 21) umfasst, die mit einer Sekundärölpumpe (19) ausgestattet ist, die von einem Leistungsübertragungselement (27) angetrieben ist, das mit einem Expansionselement (28), das auf der Wärmeschleife (29) installiert ist, in Verbindung steht.

2. Hydraulischer Hybridantrieb (1) nach dem vorstehenden Anspruch, **dadurch gekennzeichnet, dass** die Abzweigleitung (20, 21) einen Ausgangspunkt umfasst, der aus einem Niederdrucktank (16) des Hydraulikkreises (9) gebildet ist.

3. Hydraulischer Hybridantrieb (1) nach einem der vorstehenden Ansprüche, **dadurch gekennzeichnet, dass** die Abzweigleitung (20) einen Ankunftspunkt umfasst, der aus dem Hochdrucktank (12) besteht.

4. Hydraulischer Hybridantrieb (1) nach einem der Ansprüche 1 und 2, **dadurch gekennzeichnet, dass** die Abzweigleitung (21) einen Ankunftspunkt umfasst, der aus einem Abzweigpunkt (22) des Hydraulikkreises (9) besteht, der zwischen der Hauptölpumpe (7) und dem Niederdrucktank (16) platziert ist.

5. Hydraulischer Hybridantrieb (1) nach Anspruch 4, **dadurch gekennzeichnet, dass** die Abzweigleitung (20, 21) einen Mitteldrucktank (23) umfasst, der zwischen der Sekundärölpumpe (19) und dem Abzweigpunkt (22) platziert ist.

6. Hydraulischer Hybridantrieb (1) nach einem der Ansprüche 4 und 5, **dadurch gekennzeichnet, dass** die Abzweigleitung (20) ein Rückschlagventil (24) umfasst, das zwischen dem Niederdrucktank (16) und dem Abzweigpunkt (22) platziert ist.

7. Hydraulischer Hybridantrieb (1) nach einem der vorstehenden Ansprüche, **dadurch gekennzeichnet, dass** die Wärmeschleife (29) einen Verdampfer umfasst, der auf einem Abgasstrang (3) des Kraftfahrzeugs installiert ist, wobei ein solcher Abgasstrang (3) mit der Brennkraftmaschine (2) des Kraftfahrzeugs in Verbindung steht.

8. Hydraulischer Hybridantrieb (1) nach Anspruch 7, **dadurch gekennzeichnet, dass** die Wärmeschleife (29) einen Kondensator (32) und eine Wasserpumpe (33) umfasst.

9. Kraftfahrzeug, das einen hydraulischen Hybridantrieb (1) nach einem der vorstehenden Ansprüche umfasst.

## Claims

1. A hybrid hydraulic power train (1) including a hydraulic circuit (9) and a heating loop (29), with which a motor vehicle is equipped, the hydraulic circuit including:
- a main oil pump (7) connected to an internal combustion engine (1) by means of a power transmission member (8),
- a high-pressure branch (17) which extends from the main oil pump (7) to a hydraulic motor (14), and
- a low-pressure branch (18) which extends from this hydraulic motor (14) to the main oil pump (7),
**characterized in that** the hydraulic circuit (9) includes a bypass line (20, 21) which is equipped with a secondary oil pump (19) driven by a power transmission element (27) which is connected to an expansion member (28) installed on the heating loop (29) .

2. The hybrid hydraulic power train (1) according to the preceding claim, **characterized in that** the bypass line (20, 21) comprises a starting point constituted by a low-pressure reservoir (16) of the hydraulic circuit (9) .

3. The hybrid hydraulic power train (1) according to any one of the preceding claims, **characterized in that** the bypass line (20) comprises an arrival point constituted by the high-pressure reservoir (12).

4. The hybrid hydraulic power train (1) according to any one of Claims 1 and 2, **characterized in that** the bypass line (21) comprises an arrival point constituted by a bypass point (22) of the hydraulic circuit (9), which is placed between the main oil pump (7) and the low-pressure reservoir (16).

5. The hybrid hydraulic power train (1) according to Claim 4, **characterized in that** the bypass line (20, 21) comprises a medium-pressure reservoir (23) placed between the secondary oil pump (19) and the bypass point (22).

6. The hybrid hydraulic power train (1) according to any one of Claims 4 and 5, **characterized in that** the bypass line (20) comprises a non-return valve (24) placed between the low-pressure reservoir (16) and the bypass point (22).

7. The hybrid hydraulic power train (1) according to one of the preceding claims, **characterized in that** the thermal loop (29) includes an evaporator installed on an exhaust line (3) of the motor vehicle, such an exhaust line (3) being connected to the internal combustion engine (2) of the motor vehicle.

8. The hybrid hydraulic power train (1) according to Claim 7, **characterized in that** the heating loop (29) includes a condenser (32) and a water pump (33).

9. A motor vehicle including a hybrid hydraulic power train (1) according to any one of the preceding claims.
